# EUROPÄISCHE PATENTSCHRIFT

(11) **EP 3 898 554 B1**
(45) Veröffentlichungstag und Bekanntmachung des Hinweises auf die Patenterteilung: **31.08.2022**
(21) Anmeldenummer: 20713862.9
(22) Anmeldetag: 19.03.2020
(51) Int. Cl.: C04B 37/02

(54) **VERFAHREN ZUR HERSTELLUNG EINES METALL-KERAMIK-SUBSTRATS UND EIN SOLCHES METALL-KERAMIK-SUBSTRAT**
PROCESS FOR PRODUCING A METAL-CERAMIC SUBSTRATE AND SUCH A METAL-CERAMIC SUBSTRATE
PROCÉDÉ POUR LA FABRICATION D'UN SUBSTRAT MÉTAL-CÉRAMIQUE ET UN TEL SUBSTRAT MÉTAL-CÉRAMIQUE

(30) Priorität: 02.04.2019 DE 102019108594
(43) Veröffentlichungstag der Anmeldung: 27.10.2021
(73) Patentinhaber: Rogers Germany GmbH, 92676 Eschenbach (DE)
(72) Erfinder: LIU, Lei, Suzhou, Jiangsu (CN); TANG, Xinhe, 92676 München (DE); SCHMIDT, Karsten, 92676 Eschenbach (DE); ZHONG, Yang, Suzhou, Jiangsu (CN)
(74) Vertreter: Müller Schupfner & Partner Patent- und Rechtsanwaltspartnerschaft mbB
(86) Internationale Anmeldenummer: PCT/EP2020/057628
(87) Internationale Veröffentlichungsnummer: WO 2020/200815

(56) Entgegenhaltungen:
- EP-A1- 3 290 399
- JP-A- H05 286 776
- US-A1- 2018 351 330

## Beschreibung

Die vorliegende Erfindung betrifft ein Verfahren zur Herstellung eines Metall-Keramik-Substrats und ein solches Metall-Keramik-Substrat.

Metall-Keramik-Substrate sind aus dem Stand der Technik, z.B. aus JP H05 286776 A, DE 10 2013 104 739 A1, DE 19 927 046 B4 und DE 10 2009 033 029 A1, hinreichend bekannt und sind typischerweise dazu vorgesehen, ein Trägerelement auszubilden, an dem elektronische Komponenten befestigt werden können. Dabei umfassen die Metall-Keramik-Substrate in der Regel eine Keramikschicht zur Bildung einer Isolierung und eine Metallschicht, die mit der Keramikschicht verbunden ist. In der Regel ist die Metallschicht zum Bilden von Leiterbahnen oder Pads strukturiert, an denen die elektronischen Elemente befestigt werden können. So können auf dem Metall-Keramik-Substrat elektronische Schaltungen realisiert werden. Die Verwendung einer Keramikschicht hat den Vorteil einer vergleichbar hohen Isolationsfähigkeit.

Typischerweise hat sich für die Bildung eines Metall-Keramik-Substrats ein Direktmetallanbindungsverfahren, wie DCB (direct copper bonding) oder DAB (direct aluminium bonding), etabliert, wodurch das Metall mit der Keramikschicht verbunden wird. Aufgrund der vergleichsweise hohen Diskrepanz der jeweiligen Wärmeausdehnungskoeffizienten (CTE) des Metallmaterials der Metallschicht und des Keramikmaterials der Keramikschicht tritt jedoch eine Grenzflächenspannung zwischen der Keramikschicht und der Metallschicht auf, wenn das Metall-Keramik-Substrat einer Wärmeentwicklung ausgesetzt wird. Eine solche Wärme kann durch das elektronische Bauteil in seinem Betrieb, beim Anbringen des elektronischen Bauteils an der Metallschicht oder sogar bei der Herstellung des Metall-Keramik-Substrats verursacht werden. Dadurch besteht die Gefahr, dass sich die Metallschicht von der Keramikschicht ablöst.

In Anbetracht dessen war es eine Aufgabe der vorliegenden Erfindung, Metall-Keramik-Substrate zu verbessern, insbesondere in Bezug auf ihre Lebensdauer und Belastbarkeit.

Diese Aufgabe wird durch ein Verfahren zur Herstellung eines Metall-Keramik-Substrats nach Anspruch 1 und ein Metall-Keramik-Substrat nach Anspruch 14 gelöst.

Bevorzugte Ausführungsformen sind in den abhängigen Ansprüchen, der Beschreibung und den Figuren enthalten.

Gemäß einem ersten Aspekt der vorliegenden Erfindung ist ein Verfahren zur Herstellung eines Metall-Keramik-Substrats nach Anspruch 1 vorgesehen.

Im Gegensatz zum Stand der Technik ist eine Pufferschicht vorgesehen, die sowohl das erste Metallmaterial und/oder das zweite Metallmaterial einerseits und das erste Keramikmaterial und/oder das zweite Keramikmaterial andererseits umfasst. Durch die Realisierung der Pufferschicht unter Verwendung der vorstehend beschriebenen Pulvermischung ist es vorteilhaft möglich, einen thermischen Ausdehnungskoeffizienten (CTE) der Pufferschicht so anzupassen, dass sich der CTE der Pufferschicht zwischen dem CTE der mindestens einen Metallschicht und dem CTE der mindestens einen Keramikschicht befindet. Dadurch wird eine Grenzflächenspannung im Metall-Keramik-Substrat im Vergleich zu den Metall-Keramik-Substraten ohne Pufferschicht reduziert. Dabei ist es weiterhin vorteilhaft, den CTE der Pufferschicht durch Einstellen eines Verhältnisses von einer Menge eines Metallmaterials, d. h. des ersten Metallmaterials und/oder des zweiten Metallmaterials, und einer Menge eines Keramikmaterials, d. h. des ersten Keramikmaterials und/oder des zweiten Keramikmaterials, anzupassen. Dabei werden die Pulvermischung und die Pufferschicht vorzugsweise nicht durch ein Lötmaterial realisiert und bestehen beispielsweise nur aus einem Keramikmaterial und einem Metallmaterial, ohne Aktivmaterial oder dergleichen.

Vorzugsweise versteht der Fachmann unter einem Direktmetallanbindungsverfahrens, wie dem Direktkupferanbindungsverfahrens (DCB) oder eines Direktaluminiumanbindungsverfahrens (DAB), ein Verfahren zum Verbinden eines Blechs oder einer Folie, wie beispielsweise einer Kupferfolie oder eines Blechs, mit einer Keramikschicht, wobei das Blech oder die Folie eine Schmelz- oder Oxidationsschicht aufweist, die an der Oberfläche des Blechs eine eutektische Schicht oder ein eutektisches System bildet, wie beispielsweise in US 3 744 120 A1 oder DE 23 19 584 C2 beschrieben. Dabei hat das Eutektikum eine Schmelztemperatur, die niedriger ist als die Schmelztemperatur des Metalls. Durch das Anordnen des Blechs oder der Folie auf der Keramikschicht und das Erwärmen der Baugruppe und durch Erwärmen aller Schichten werden infolgedessen alle Schichten miteinander verbunden, insbesondere im Bereich der Schmelz- oder Oxidationsschicht. Zum Beispiel umfasst DCB:
- Oxidieren eines Kupferblechs zur Bildung einer homogenen Oxidationsschicht (entektische Schicht oder Lage),
- Anordnen des oxidierten Kupferblechs auf einer Keramikschicht,
- Erwärmen der durch das oxidierte Kupferblech und die Keramikschicht gebildeten Baugruppe auf eine Prozesstemperatur von 1025 bis 1083°C, vorzugsweise bis 1071°C, und
- Abkühlen auf Raumtemperatur.

Keramikmaterialien, d. h. das erste Keramikmaterial und/oder das zweite Keramikmaterial, können Al₂O₃, Si₃N₄, AIN, ZTA (Zirkonia thoughened alumina), MgO, BeO, SiC oder hochdichtes MgO (> 90% der theoretischen Dichte), TSZ (tetragonal stabilisiertes Zirkonoxid) oder ZTA sein. Vorstelllbar ist auch, dass die mindestens eine Keramikschicht eine Hybridkeramik oder eine Verbundkeramik ist, die verschiedene Keramikschichten unterschiedlicher Art zur Erzeugung einer bestimmten Eigenschaft kombiniert, insbesondere durch Übereinanderstapeln der verschiedenen Keramikschichten. Potenzielle Metallmaterialien, d.h. das erste Metallmaterial und/oder das zweite Metallmaterial, sind beispielsweise Kupfer, Aluminium, Molybdän oder eine Legierung wie CuW, CuMo, CuAl, AICu und/oder CuCu, insbesondere in einer Kupfersandwichstruktur mit einer ersten Kupferschicht und einer zweiten Kupferschicht, wobei die erste Kupferschicht eine von der Korngröße der zweiten Kupferschicht unterschiedliche Korngröße aufweist.

Vorzugsweise umfasst die Pulvermischung nur Pulver aus dem ersten Metallmaterial und dem ersten Keramikmaterial. Somit entsprechen das Metallmaterial und das Keramikmaterial in der Pulvermischung dem Material der mindestens einen Keramikschicht und der mindestens einen Metallschicht. Dadurch kann leichter gewährleistet werden, dass der erzeugte CTE zwischen dem CTE der mindestens einen Metallschicht und der mindestens einen Keramikschicht liegt. Vorzugsweise ist das erste Keramikmaterial Al₂O₃ und/oder das erste Metallmaterial Kupfer. Darüber hinaus ist insbesondere vorgesehen, dass die mindestens eine Pulvermischung zwischen der mindestens einen Keramikschicht und der mindestens einen Metallschicht angeordnet ist, d. h. die Pulvermischung ist zwischen der mindestens einen Metallschicht und der mindestens einen Keramikschicht, insbesondere vor dem Direktmetallanbindungsverfahren, sandwichartig angeordnet. Vorzugsweise ist die Pulvermischung homogen auf der mindestens einen Keramikschicht verteilt und anschließend wird die mindestens eine Metallschicht, vorzugsweise in Form mindestens einer oxidierten Metallschicht, auf die Pulvermischung aufgebracht. Darüber hinaus bedeutet der Begriff "Verbundpulver", dass Partikel aus verschiedenen Materialien zu einer neuen Art von Partikeln verschmolzen wurden, die beide verschiedenen Materialien umfassen. Das Verbundpulver umfasst diese neue Art von Partikeln, wobei bei der neuen Art von Partikeln ein Keramikmaterial und ein Metallmaterial miteinander verschmolzen sind. So wird beispielsweise das Metallmaterial in Partikel des Keramikmaterials eingeschleust.

Das Verbundpulver bildet eine Art Hybridpulver-Teilchen, das sowohl aus dem ersten Metallmaterial als auch aus dem ersten Keramikmaterial besteht oder diese umfasst. Vorstellbar ist auch, dass das Verbundpulver zusätzlich ein Metalloxid umfasst, das Bestandteil des Partikels des Pulvergemischs ist. Weiterhin ist es denkbar, dass Partikel aus dem Verbundpulver einen Kernabschnitt und einen den Kernabschnitt umgebenden Mantelabschnitt aufweisen, wobei der Kernabschnitt aus dem ersten Keramikmaterial/zweiten Keramikmaterial und der Mantelabschnitt aus dem ersten Metallmaterial und/oder dem zweiten Metallmaterial besteht oder umgekehrt.

Weiterhin ist es vorzugsweise vorgesehen, dass die Hypbridpulver-Teilchen des Verbundpulvers im Wesentlichen, d. h. im arithmetischen Mittel, nur geringfügig von einer kugelförmigen Form abweichen. Vorstellbar ist auch, dass die Hybridpulver-Teilchen bzw. -Partikel im Wesentlichen elliptisch sind, wobei das Verhältnis von Hauptachse zur Nebenachse zwischen 0,2 und 1,0, bevorzugt 0,6 und 1,0, besonders bevorzugt zwischen 0,8 und 1,0 liegt.

Vorzugsweise ist es vorgesehen, dass das Pulvergemisch zu mehr als 50 %, bevorzugt zu mehr als 75 % und besonders bevorzugt zu mehr als 90 % aus dem Verbundpulver besteht. Besonders bevorzugt ist es vorgesehen, dass das Pulvergemisch im Wesentlichen vollständig aus dem Verbundpulver besteht. Dabei ist es vorstellbar, dass in einem Vorbereitungsschritt das Verbundpulver von anderen Bestanteilen, wie z. B. einem Pulveranteil, der nur aus dem Metallmaterial oder nur aus dem Keramikmaterial besteht, getrennt wird, so dass das Pulvergemisch im Wesentlichen ausschließlich aus dem Verbundmaterial besteht. Unter "im Wesentlichen ausschließlich" versteht der Fachmann insbesondere, dass Unreinheiten bzw. Fremdstoffe oder Fremdpartikel bis zu 3 Gew. %, bevorzugt bis zu 1,5 Gew-% und besonders bevorzugt bis zu 0,5 Gew-% in dem Pulvergemisch vorliegen können.

Weiterhin ist es bevorzugt vorgesehen, dass die Pulvermischung mehrere Verbundpulver umfasst. Dadurch ist es in vorteilhafter Weise, die Eigenschaften der Pufferschicht bezüglich ihres thermischen Ausdehnungskoeffizienten weiter zu verbessern.

Gemäß einer bevorzugten Ausführungsform ist vorgesehen, dass in einem Vorbereitungsschritt die mindestens eine Pulvermischung durch ein Mechanofusionsverfahren realisiert wird. Das Mechanofusionsverfahren ermöglicht vorteilhaft die Bereitstellung eines Verbundpulvers, das erfolgreich zur Realisierung der Pufferschicht eingesetzt werden kann. Vorzugsweise wird die Mechanofusion durch eine Vorrichtung realisiert, die einen Rotor und einen Stator umfasst, wobei der Rotor und der Stator so angeordnet sind, dass sie eine Oberfläche der zu verschmelzenden Partikel durch Druck und Reibung in einem Zentrifugalbereich der Anordnung von Rotor und Stator hoch belasten. Als Folge der Behandlung dieser Vorrichtung werden die Partikel aus zwei verschiedenen Materialien, die der Anordnung von Stator und Rotor zugeführt werden, zusammengefügt. So sind beispielsweise im Verbundpulver Partikel des Keramikmaterials dauerhaft an die Partikel des Metallmaterials gebunden, insbesondere bedecken die Pulverpartikel des Keramikmaterials die Partikel des Metallmaterials zumindest teilweise.

In einer weiteren Ausführungsform ist vorgesehen, dass das Verfahren zum Anordnen der mindestens einen Pulvermischung zwischen der mindestens einen Metallschicht und der mindestens einen Keramikschicht ferner umfasst:
- Mischen der mindestens einen Pulvermischung mit einem Lösungsmittel, insbesondere einem organischen Lösungsmittel, zur Bildung einer Paste und/oder
- Anordnen der Paste auf der mindestens einen Metallschicht und/oder der mindestens einen Keramikschicht und/oder
- Entfernen des Lösungsmittels.

Somit ist es vorteilhafterweise möglich, die Pulvermischung homogen auf die mindestens eine Keramikschicht zu verteilen. Vorzugsweise ist das Lösungsmittel ein Harz oder ein Polymer. So ist beispielsweise das Lösungsmittel ein organisches Bindemittel. Insbesondere beträgt das Verhältnis der mindestens einen Pulvermischung und dem Lösungsmittel 1:1. Zum Entfernen des Lösungsmittels wird die auf der mindestens einen Keramikschicht angeordnete Paste, beispielsweise für etwa eine Stunde in einer Luftatmosphäre auf 600 °C erhitzt, wobei Atmosphäre, Temperatur und/oder Dauer des Erhitzens an das Lösungsmittel angepasst ist.

Vorzugsweise wird die Paste auf die mindestens eine Metallschicht und/oder die mindestens eine Keramikschicht mittels Siebdruck, Walzen und/oder Tauchen aufgebracht. So kann die Paste kontrolliert und reproduzierbar verteilt werden. Vorzugsweise wird die Aufbringungsmethode wiederholt, um eine Pastenschicht mit einer genau definierten Dicke bereitzustellen.

Insbesondere liegt eine Partikelgröße des ersten Metallmaterials und/oder des zweiten Metallmaterials in der Pulvermischung zwischen 0,1 und 100 µm, vorzugsweise zwischen 0,1 und 50 µm und besonders bevorzugt zwischen 0,5 und 25 µm. Eine gewünschte Dicke und Gleichmäßigkeit der Pufferschicht kann hierbei durch die Wahl der richtigen Partikelgröße und Größenverteilung erreicht werden. Dadurch können der CTE und der thermische Widerstand der Pufferschicht gut eingestellt werden.

Darüber hinaus ist vorgesehen, dass eine Partikelgröße des ersten Keramikmaterials und/oder des zweiten Keramikmaterials zwischen 0,1 und 50 µm, vorzugsweise zwischen 0,1 und 30 µm und besonders bevorzugt zwischen 0,2 und 20 µm liegt.

Insbesondere weist die fertige Pufferschicht eine Dicke von mehr als 2 µm auf, vorzugsweise zwischen 2 µm und 50 µm, besonders bevorzugt zwischen 5 µm und 30 µm. Durch die Erhöhung der Dicke der Pufferschicht unterstützt die Pufferschicht eine Wärmespreizung. Dadurch wird die Wärme an der Grenzfläche zwischen der Pufferschicht und der mindestens einen Keramikschicht reduziert und homogener verteilt. Darüber hinaus steht die Pufferschicht von der mindestens einen Keramikschicht ab.

In einer weiteren bevorzugten Ausführungsform ist es vorgesehen, dass die Metallschicht zumindest teilweise, vorzugsweise vollständig, in das mindestens eine Pulvergemisch eingebettet ist. So wird beispielsweise die mindestens eine Metallschicht in die Pulvermischung eingebettet, bevor das Direktmetallanbindungsverfahren durchgeführt wird. Dadurch kann die Pufferschicht an den Seitenwänden der mindestens einen Metallschicht befestigt oder gebunden werden, um die bindungsfestigkeit der mindestens einen Metallschicht an der mindestens einen Keramikschicht zu erhöhen. Der Begriff "Seitenwand" bezeichnet vorzugsweise solche Oberflächen, die nicht parallel zur Haupterstreckungsebene verlaufen und einen Rand der mindestens einen Metallschicht in einer Richtung parallel zur Haupterstreckungsebene bilden. So kann beispielsweise die Pulvermischung eine Füllung ersetzen, der ansonsten zumindest Teile der Seitenwände der Metallschicht abdeckt, um die Anbindung in einem Randbereich der mindestens einen Metallschicht zu verstärken. Es ist auch möglich, dass die Pulvermischung zusätzlich auf die mindestens eine Metallschicht im Randbereich aufgebracht wird, um die Haftfestigkeit weiter zu erhöhen.

Vorzugsweise sind zwischen der mindestens einen Keramikschicht und der mindestens einen Metallschicht mehrere Pufferschichten angeordnet, wobei sich die einzelnen Pufferschichten hinsichtlich ihrer thermischen Ausdehnungskoeffizienten (CTEs) voneinander unterscheiden. Somit ist es vorteilhaft, einen Gradienten der CTEs in den verschiedenen Pufferschichten von der mindestens einen Keramikschicht zur mindestens einen Metallschicht zu realisieren, d. h. die CTEs der verschiedenen Schichten ändern sich schrittweise von Schicht zu Schicht - von einem CTE in der Nähe des CTEs der mindestens einen Keramikschicht - zu einem CTE in der Nähe des CTEs der mindestens einen Metallschicht.

Zur Realisierung einer solchen Mehrpufferschichtstruktur werden vorzugsweise entsprechende Pulvermischungen, insbesondere in mehreren Pasten, übereinander angeordnet, wobei sich das Verhältnis von Metallmaterial zu Keramikmaterial von Schicht zu Schicht ändert. Durch den Wechsel der CTEs von Pufferschicht zu Pufferschicht kann die Grenzflächenspannung zwischen den verschiedenen Schichten weiter reduziert werden.

Bevorzugt umfasst das erfindungsgemässe Verfahren zur Herstellung eines Metall-Keramik-Substrats die Schritte:
- Bereitstellen mindestens einer Metallschicht, die ein erstes Metallmaterial umfasst, und mindestens einer Keramikschicht, die ein erstes Keramikmaterial umfasst;
- Bereitstellen mindestens einer Pulvermischung, die
   -- das erste Metallmaterial und/oder ein zweites Metallmaterial und
   -- das erste Keramikmaterial und/oder ein zweites Keramikmaterial
   umfasst,
wobei die Pulvermischung vorzugsweise als Verbundpulver realisiert ist;
- Anordnen der mindestens einen Pulvermischung neben der mindestens einen Metallschicht zum Bilden eines Füllstoffs, der an einer Seitenwand der mindestens einen Metallschicht angebunden ist, und
- Durchführen eines Direktmetallanbindungsverfahrens zum Bilden des Metall-Keramik-Substrats.

Dadurch wird das Pulvergemisch am äußersten Rand der Metallschicht dazu verwendet, in diesem bei thermischen Belastungen besonders empfindlichen Bereich eine optimierte Anpassung zwischen den thermischen Ausdehungskoeffizienten der Metallschicht und der Keramikschicht zu schaffen. Insbesondere wirkt der Kantenverguss mittels der Pulvermischung einer Rissbildung im Bereich des äußersten Rands der Metallschicht zwischen der Keramikschicht und der Metallschicht oder in der Keramikschicht oder in der Metallschicht entgegen.

Weiterhin ist es bevorzugt vorgesehen, dass die Metallschicht am äußersten Rand einen geschwungen oder gebogenen Verlauf aufweist. Solch ein geschwungener oder gebogener Verlauf wirkt sich zusätzlich vorteilhaft auf die belasteten äußersten Randbereiche der Metallschicht aus, die an die Keramikschicht angebunden sind. Beispielsweise wird dabei der gebogene Verlauf durch ein Ätzen realisiert, so dass sich ein gebogener bzw. geschwungener Ätzkantenverlauf ergibt.

Alle für das oben beschriebene Verfahren genannten Eigenschaften und Vorteile gelten analog für dieses Verfahren und umgekehrt. Tatsächlich wird die Pulvermischung zur Bildung eines Füllstoffs verwendet, der die Seitenwände der mindestens einen Metallschicht im fertigen Zustand kontaktiert, um deren Anbindung zur Keramikschicht an ihren Rändern zu verstärken. Es ist sogar möglich, dass die Pulvermischung nach dem Strukturieren der mindestens einen Metallschicht zugegeben wird.

Gemäß einem weiteren Aspekt der vorliegenden Erfindung ist ein Metall-Keramik-Substrat nach Anspruch 14 vorgesehen.

Alle für die oben beschriebenen Verfahren genannten Eigenschaften und Vorteile gelten analog für dieses Metall-Keramik-Substrat und umgekehrt.

Wo nicht bereits ausdrücklich beschrieben, können einzelne Ausführungsformen oder deren einzelne Aspekte und Merkmale miteinander kombiniert oder ausgetauscht werden, ohne den Umfang der beschriebenen Erfindung einzuschränken oder zu erweitern, wenn eine solche Kombination oder ein solcher Austausch sinnvoll ist bzw. im Sinne dieser Erfindung. Vorteile, die in Bezug auf eine Ausführungsform der vorliegenden Erfindung beschrieben werden, sind gegebenenfalls auch gegenüber anderen Ausführungsformen der vorliegenden Erfindung von Vorteil.

In den Zeichnungen:
- Fig. 1: zeigt ein Metall-Keramik-Substrat gemäß einer ersten bevorzugten Ausführungsform der vorliegenden Erfindung,
- Fig. 2: zeigt ein Metall-Keramik-Substrat gemäß einer zweiten bevorzugten Ausführungsform der vorliegenden Erfindung,
- Fig. 3: zeigt ein Metall-Keramik-Substrat gemäß einer dritten bevorzugten Ausführungsform der vorliegenden Erfindung darstellt und
- Fig. 4: zeigt ein Flussdiagramm, das das Verfahren zur Herstellung eines Metall-Keramik-Substrats gemäß einer bevorzugten Ausführungsform veranschaulicht.

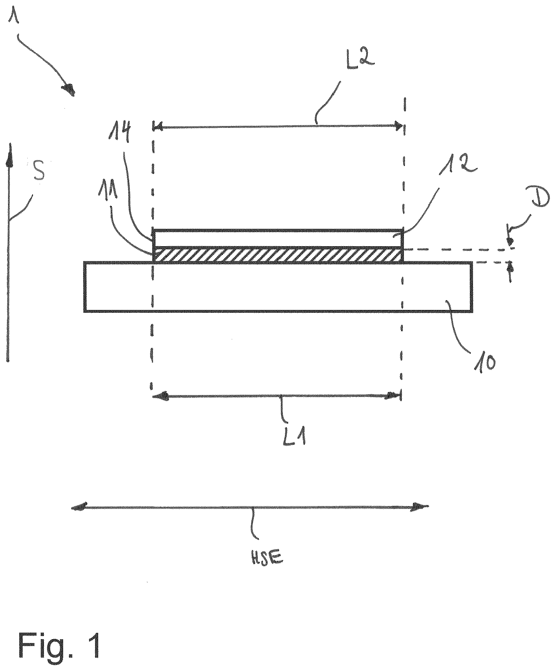

In Figur 1 ist ein Metall-Keramik-Substrat 1 gemäß einer ersten bevorzugten Ausführungsform der vorliegenden Erfindung dargestellt. Wesentliche Bestandteile eines Metall-Keramik-Substrats 1 sind mindestens eine Keramikschicht 10, die aus einem ersten Keramikmaterial hergestellt ist und sich entlang einer Haupterstreckungsebene HSE erstreckt, und mindestens eine Metallschicht 12, die aus einem ersten metallischen Material hergestellt und mit der mindestens einen Keramikschicht 10 verbunden ist. Dabei werden die mindestens eine Metallschicht 12 und die mindestens eine Keramikschicht 10 in einer Stapelrichtung S senkrecht zur Hauptstreckebene HSE übereinander gestapelt. Solche Metall-Keramik-Substrate 1 sind als Trägerelement für elektronische Komponenten vorgesehen, die am Metall-Keramik-Substrat 1, insbesondere an einer Metallschicht 12 in Form einer strukturierten Metallisierung, die mit der Keramikschicht 10 verbunden ist, befestigt sind. Vorzugsweise bildet die strukturierte Metallisierung eine Leiterbahn einer elektronischen Schaltung oder Pads zur Befestigung von elektronischen Bauteilen an der strukturierten Metallisierung, z.B. durch Ultraschallschweißen oder Löten. Zum Verbinden der mindestens einen Metallschicht 12 mit der mindestens einen Keramikschicht 10 das Direktkupferanbindungsverfahren (DCB) 105 entwickelt und wird bevorzugt.

Aufgrund unterschiedlicher thermischer Ausdehnungskoeffizienten (CTE) der mindestens einen Metallschicht 12 und der mindestens einen Keramikschicht 10 entsteht eine thermomechanische Spannung, wenn das Metall-Keramik-Substrat 1 einer Wärmeeinwirkung ausgesetzt wird. Eine solche Wärme kann durch die elektronischen Komponenten während ihres Betriebs, während der Herstellung des Metall-Keramik-Substrats 1 oder während der Befestigung des elektronischen Bauteils an dem Metall-Keramik-Substrat 1 verursacht werden. Dadurch besteht die Gefahr, dass sich die gebundene Metallschicht 12 von der Keramikschicht 10 ablöst und Defekte verursacht, die sogar zu einer Untauglichkeit des Metall-Keramik-Substrats 1 führen können.

Das in Figur 1 dargestellte Metall-Keramik-Substrat 1 weist zusätzlich mindestens eine Pufferschicht 11 auf, die zwischen der mindestens einen Metallschicht 12 und der mindestens einen Keramikschicht 10 angeordnet ist. Die mindestens eine Pufferschicht 11 umfasst eine Mischung aus
- dem ersten Metallmaterial und/oder einem zweiten Metallmaterial und
- das erste Keramikmaterial und/oder ein zweites Keramikmaterial.

Durch die Wahl des richtigen Materials und/oder eines geeigneten Verhältnisses der verschiedenen Materialien ist es in vorteilafter Weise möglich, den thermischen Ausdehnungskoeffizienten (CTE) so anzupassen, dass der CTE der Pufferschicht 11 zwischen dem CTE der mindestens einen Metallschicht 12 und der mindestens einen Keramikschicht 10 liegt. Dadurch kann eine innere thermomechanische Spannung vorteilhaft reduziert werden. Vorzugsweise weist die Pufferschicht 11 eine Dicke zwischen 5 und 100 µm auf, besonders bevorzugt zwischen 10 und 40 µm, gemessen entlang der Stapelrichtung S.

Es ist auch möglich, dass zwischen der mindestens einen Metallschicht 12 und der mindestens einen Keramikschicht 10 mehrere Pufferschichten 11 angeordnet sind, wobei sich bevorzugt die mehreren Puffer 11 hinsichtlich ihres thermischen Ausdehnungskoeffizienten unterscheiden und besonders bevorzugt die unterschiedlichen thermischen Ausdehnungskoeffizienten der verschiedenen Pufferschichten einen Gradienten vom CTE der Metallschicht 12 zum CTE der Keramikschicht 10 bilden. So weist beispielsweise eine Pufferschicht 11 benachbart zur mindestens einen Keramikschicht 10 einen CTE nahe dem CTE der mindestens einen Keramikschicht 10 und eine weitere Pufferschicht 11 nahe der mindestens einen Metallschicht 12 einen CTE nahe dem CTE der mindestens einen Metallschicht 12 auf. Dadurch kann ein glatter Verlauf vom CTE der mindestens einen Keramikschicht 10 zur mindestens einen Metallschicht 12 zur weiteren Reduzierung thermomechanischer Spannungen, insbesondere zur Reduzierung der Grenzflächenspannung zwischen der mindestens einen Keramikschicht 10 und der der mindestens einen Keramikschicht 10 benachbarten Pufferschicht 11 in Stapelrichtung S und/oder der Grenzflächenspannung zwischen der mindestens einen Metallschicht 12 und der der der mindestens einen Metallschicht 10 benachbarten Pufferschicht 11 in Stapelrichtung S, eingestellt werden.

Ein solcher Gradient könnte beispielsweise dadurch realisiert werden, dass das Verhältnis einer Menge an Metallmaterial, wie das erste Metallmaterial und/oder das zweite Metallmaterial, zu einer Menge des Keramikmaterials, wie das erste Keramikmaterial und/oder das zweite Keramikmaterial, in der jeweiligen Pufferschicht 11 der mehreren Pufferschichten 11 geändert wird. Alternativ oder zusätzlich ist es möglich, dass sich das Metallmaterial und / oder das Keramikmaterial in der jeweiligen Pufferschicht 11 voneinander unterscheiden.

In der in Figur 1 dargestellten Ausführungsform weist die Pufferschicht 11 eine erste Länge L1 auf, die in einer Richtung parallel zur Haupterstreckungsebene HSE gemessen wird, und die mindestens eine Metallschicht 12 weist eine zweite Länge L2 auf, die in der gleichen Richtung gemessen wird. Insbesondere sind die mindestens eine Metallschicht 12 und die mindestens eine Pufferschicht 11 in Stapelrichtung S deckungsgleich, d.h. die erste Länge L1 ist gleich der zweiten Länge L2.

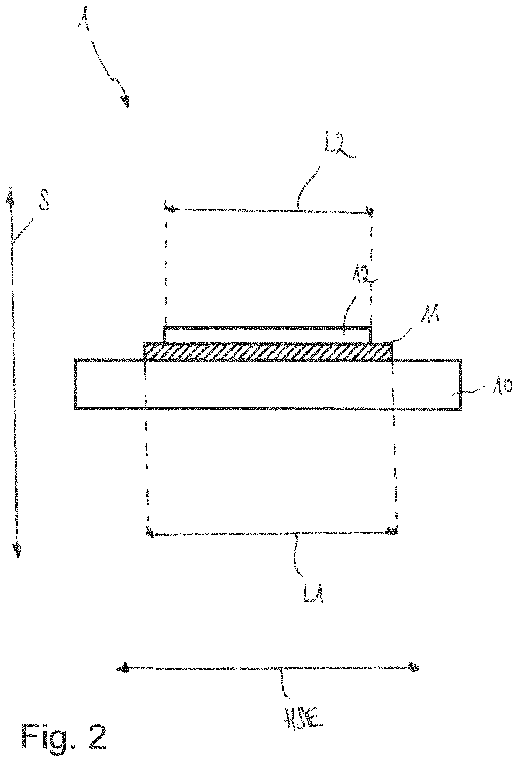

Eine zweite bevorzugte Ausführungsform, die in Figur 2 dargestellt ist, entspricht im Wesentlichen der ersten bevorzugten Ausführungsform, die in Figur 1 dargestellt ist. Die zweite bevorzugte Ausführungsform unterscheidet sich von der ersten Ausführungsform dadurch, dass eine erste Länge L1 größer als die zweite Länge L2 ist. So ist beispielsweise die erste Länge L1 1,1 bis 1,5 mal größer als die zweite Länge L2. Insbesondere erstreckt sich die mindestens eine Pufferschicht 11 über einen Rand der mindestens einen Metallschicht 12 hinaus. Eine solche Anordnung unterstützt eine Wärmespreizung der an einer Oberseite der Metallschicht 12 erzeugten Wärme und unterstützt das Bindungsvermögen der Metallschicht 12.

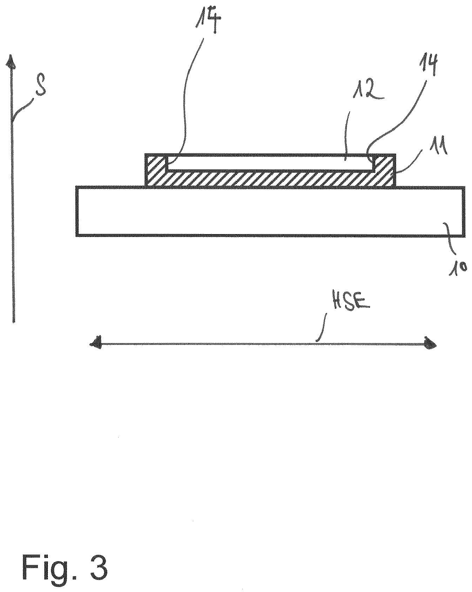

Eine dritte in Figur 3 dargestellte bevorzugte Ausführungsform entspricht im Wesentlichen der ersten und zweiten bevorzugten Ausführungsform in den Figuren 1 und 2. Zusätzlich ist vorgesehen, dass die mindestens eine Metallschicht 12 zumindest teilweise in die mindestens eine Pufferschicht 11 eingebettet ist, d. h. die Pufferschicht 11 kontaktiert mindestens zwei oder drei Seiten der mindestens einen Metallschicht 12. Somit unterstützt die Pufferschicht 11 die Verklebung an den Randbereichen der mindestens einen Metallschicht 12, um das Risiko eines Ablösens weiter zu begrenzen.

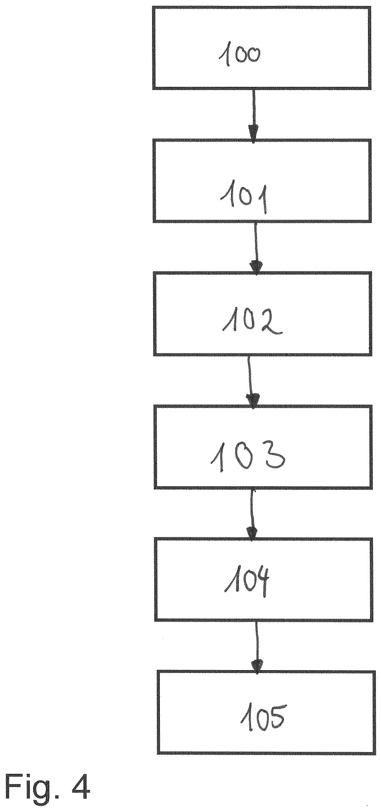

In Figur 4 ist ein Flussdiagramm zur Veranschaulichung eines Verfahrens zur Herstellung des Metall-Keramik-Substrats 1 gemäß einer bevorzugten Ausführungsform dargestellt. Insbesondere sind zu Beginn neben einer Pulvermischung die mindestens eine Metallschicht 12 aus einem ersten Metall und die mindestens eine Keramikschicht 10 aus einer ersten Keramik vorgesehen, wobei diese Pulvermischung
- das erste Metallmaterial und/oder ein zweites Metallmaterial und
- das erste Keramikmaterial und/oder ein zweites Keramikmaterial umfasst.

Vor dem Bereitstellen 101 der Pulvermischung kann die Pulvermischung in einem Vorbereitungsschritt 100 realisiert werden, vorzugsweise durch homogenes Mischen des ersten Metallpulvers und/oder des zweiten Metallpulvers mit dem ersten Keramikpulver und/oder dem zweiten Keramikpulvern, am besten durch ein Mechanofusionsverfahren. Vorzugsweise liegt eine Partikelgröße des ersten Metallmaterials und/oder des zweiten Metallmaterials in der Pulvermischung zwischen 0,1 und 100 µm, bevorzugt zwischen 0,1 und 50 µm und besonders bevorzugt zwischen 0,5 und 25 µm. Darüber hinaus ist vorgesehen, dass eine Partikelgröße des ersten Keramikmaterials und/oder des zweiten Keramikmaterials zwischen 0,1 und 50 µm, bevorzugt zwischen 0,1 und 30 µm und besonders bevorzugt zwischen 0,2 und 20 µm liegt. Zum Anordnen 103 der Pulvermischung auf der mindestens einen Keramikschicht 10 ist es vorgesehen, dass die im Vorbereitungsschritt 100 realisierte mindestens eine Pulvermischung mit einem Lösungsmittel, insbesondere mit einem organischen Lösungsmittel, vorzugsweise mit einem organischen Bindematerial, zur Bildung einer Paste vermischt wird. Nach dem Mischen 102 kann die Paste auf die mindestens eine Keramikschicht 10 aufgebracht werden, z.B. durch Siebdruck, Walzen, Tauchen und/oder dergleichen. Insbesondere wird die Paste so angeordnet, dass eine Schicht mit einer weitgehend homogenen Dicke gebildet wird. Zum Entfernen des Lösungsmittels 104 wird die Paste auf 600 °C erhitzt, nachdem die Paste beispielsweise auf die mindestens eine Keramikschicht 10 aufgebracht wurde.

Nach dem Entfernen 104 des Lösungsmittels wird die mindestens eine Keramikschicht 10 mit der Pulvermischung, vorzugsweise homogen, bedeckt. In einem nachfolgenden Schritt wird mindestens eine als Folie ausgebildete und aus dem ersten Metallmaterial hergestellte Metallschicht 12 auf die Pulvermischung aufgebracht. Mit anderen Worten: Die Pulvermischung ist zwischen der mindestens einen Metallschicht 12 und der mindestens einen Keramikschicht 10 eingeklemmt. Zum Bilden des Metall-Keramik-Substrats 1 wird anschließend eine Direktkupferanbindungsverfahren 105 durchgeführt, wobei das Direktkupferanbindungsverfahren 105 die Pulvermischung in die Pufferschicht überführt.

### BEISPIEL:

In einem ersten Beispiel werden 200 g Al₂O₃-Pulver und 100 g Kupferpulver in eine Mechanofusionsmaschine gegeben und für etwa zwei Stunden gemischt. Die durchschnittliche Partikelgröße des Al₂O₃-Pulvers beträgt 3,67 µm und die durchschnittliche Partikelgröße des Kupferpulvers etwa 5,69 µm. Der Rotor in der Mechanofusionsmaschine wird mit einer Drehzahl von ca. 1500 U/min gedreht. Dabei werden die Pulverpartikel in der Mechanosfusionsmaschine zentrifugal an eine Innenwand geworfen, durchlaufen einen Spalt zwischen Rotor und einem Presskopf und unterliegen großen Scherkräften, wobei Stöße und hohe Verdichtung eine vergleichsweise hohe Temperatur und ein Plasma erzeugen, um die zwei Materialien miteinander zu verbinden.

Nach der Realisierung der Pulvermischung wird die Pulvermischung mit einem Lösungsmittel, nämlich einem Bindemittel, zu einer Paste vermischt. Dabei beträgt das Gewichtsverhältnis der Pulvermischung zum Lösungsmittel 1:1. Anschließend wird die Paste, die das Lösungsmittel und die Pulvermischung umfasst, auf ein Al₂O₃-Substrat mittels Siebdruck aufgebracht, das die mindestens eine Keramikschicht darstellt. Das Erwärmen 104 der Paste bei 600 °C in einer Luftatmosphäre für eine Stunde bewirkt das Entfernen des Lösungsmittels aus der mindestens einen Keramikschicht 10 abgeschiedenen Paste. Anschließend wird eine 300 µm dicke oxidierte Kupferfolie auf die auf der mindestens einen Keramikschicht 10 angeordneten Pulvermischung aufgebracht. Zum Verbinden der Kupferfolie mit dem Al₂O₃-Substrat wird die Baugruppe, umfassend das Al₂O₃-Substrat, die Pulvermischung und die Kupferfolie, in einen Hochtemperaturofen gestellt und anschließend ein Direktkupferbindungsverfahren 105 durchgeführt, um das Metall-Keramik-Substrat 1 mit einer Pufferschicht 11 zu realisieren, die durch die Pulvermischung gebildet wird, die zwischen dem Al₂O₃-Substrat und der Kupferfolie angeordnet ist.

### Bezugszeichenliste

- 1: Metall-Keramik-Substrat
- 10: Keramikschicht
- 11: Pufferschicht
- 12: Metallschicht
- 14: Seitenwand
- L1: erste Länge
- L2: zweite Länge
- D: Dicke
- S: Stapelrichtung
- HSE: Haupterstreckungsebene
- 100: Vorbereitungsschritt
- 101: Bereitstellen
- 102: Mischen
- 103: Anordnen
- 104: Entfernen
- 105: Direktkupferanbindungsverfahren (DCB)

## Patentansprüche

1. Verfahren zur Herstellung eines Metall-Keramik-Substrats (1), umfassend:
- Bereitstellen mindestens einer Metallschicht (12) aus einem ersten Metallmaterial und mindestens einer Keramikschicht (10) aus einem ersten Keramikmaterial;
- Bereitstellen (101) mindestens einer Pulvermischung, umfassend
-- das erste Metallmaterial und/oder ein zweites Metallmaterial und
-- das erste Keramikmaterial und/oder ein zweites Keramikmaterial,
- Anordnen der mindestens einen Pulvermischung zwischen der mindestens einen Metallschicht (12) und der mindestens einen Keramikschicht (10) zum Ausbilden einer Pufferschicht (11) zwischen der mindestens einen Metallschicht (12) und der mindestens einen Keramikschicht (10) im gefertigen Metall-Keramik-Substrat (1), und
- Durchführen eines Direktmetallanbindungsverfahrens, insbesondere eines Direktkupferanbindungsverfahrens (105), zum Bilden des Metall-Keramik-Substrats,
wobei die Metallschicht und die Keramikschicht durch die Pufferschicht (1) verbunden sind, **dadurch gekennzeichnet, dass** die mindestens eine Pulvermischung als Verbundpulver realisiert ist, wobei das Verbundpulver aus Hybridpulver-Teilchen gebildet ist, das sowohl das erste Metallmaterial als auch das erste Keramikmaterial umfasst.

2. Verfahren gemäß Anspruch 1, wobei das Pulvergemisch zu mehr als 50 %, bevorzugt zu mehr als 75 % und besonders bevorzugt zu mehr als 90 % aus dem Verbundpulver besteht.

3. Verfahren gemäß einem der vorhergehenden Ansprüche, wobei die Pulvermischung mehrere Verbundpulver umfasst.

4. Verfahren gemäß einem der vorhergehenden Ansprüche, wobei in einem Vorbereitungsschritt (100) die mindestens eine Pulvermischung durch ein Mechanofusionsverfahren realisiert wird.

5. Verfahren nach einem der vorstehenden Ansprüche, zum Anordnen der mindestens einen Pulvermischung zwischen der mindestens einen Metallschicht (12) und der mindestens einen Keramikschicht (10) ferner umfassend:
- Mischen (102) der mindestens einen Pulvermischung mit einem Lösungsmittel, insbesondere einem organischen Lösungsmittel, zur Bildung einer Paste,
- Anordnen (103) der Paste auf der mindestens einen Metallschicht und/oder der mindestens einen Keramikschicht
- Entfernen (104) des Lösungsmittels.

6. Verfahren nach Anspruch 5, wobei die Paste auf die mindestens eine Metallschicht (12) und/oder die mindestens eine Keramikschicht (10) mittels Siebdruck, Walzen und/oder Tauchen aufgebracht wird.

7. Verfahren nach einem der vorstehenden Ansprüche, wobei eine Partikelgröße des ersten Metallmaterials und/oder des zweiten Metallmaterials in der Pulvermischung zwischen 0,1 und 100 µm, vorzugsweise zwischen 0,1 und 50 µm und am bevorzugtesten zwischen 0,5 und 25 µm liegt.

8. Verfahren nach einem der vorstehenden Ansprüche, wobei eine Partikelgröße des ersten Keramikmaterials und/oder des zweiten Keramikmaterials zwischen 0,1 und 50 µm, vorzugsweise zwischen 0,1 und 30 µm und am meisten bevorzugt zwischen 0,2 und 20 µm liegt.

9. Verfahren nach einem der vorhergehenden Ansprüche, wobei die mindestens eine Metallschicht (12) zumindest teilweise in die Pufferschicht (11) eingebettet ist.

10. Verfahren nach einem der vorstehenden Ansprüche, wobei mehrere Pufferschichten (11) zwischen der mindestens einen Keramikschicht (10) und der mindestens einen Metallschicht (12) angeordnet sind, wobei sich die mehreren Pufferschichten (11) insbesondere hinsichtlich ihrer thermischen Ausdehnungskoeffizienten voneinander unterscheiden.

11. Verfahren zur Herstellung eines Metall-Keramik-Substrats (1), nach einem der vorhergehenden Ansprüche, umfassend:
- Bereitstellen mindestens einer Metallschicht (12), die ein erstes Metallmaterial und mindestens eine Keramikschicht (10), die ein erstes Keramikmaterial umfasst, umfasst;
- Bereitstellen (101) mindestens einer Pulvermischung, umfassend
-- das erste Metallmaterial und/oder ein zweites Metallmaterial und
-- das erste Keramikmaterial und/oder ein zweites Keramikmaterial, wobei die Pulvermischung vorzugsweise als Verbundpulver realisiert ist,
- Anordnen der mindestens einen Pulvermischung neben der mindestens einen Metallschicht (12) zum Bilden eines Füllstoffes, insbesondere eines Kantenvergusses, der an eine Seitenwand (14) der mindestens einen Metallschicht (12) angebunden ist, und
- Durchführen eines Direktmetallanbindungsverfahrens, insbesondere eines Direktkupferanbindungsverfahrens (105), zum Bilden des Metall-Keramik-Substrats (1).

12. Verfahren gemäß Anspruch 11, wobei die Metallschicht (12) am äußersten Rand einen geschwungen oder gebogenen Verlauf aufweist.

13. Verfahren gemäß Anspruch 11 oder 12, wobei die Metallschicht und die Keramikschicht durch die Pufferschicht verbunden sind.

14. Metall-Keramik-Substrat (1), realisiert durch ein Verfahren nach einem der vorhergehenden Ansprüche, umfassend:
- eine Metallschicht (12) aus einem ersten Metallmaterial und eine Keramikschicht (10) aus einem ersten Keramikmaterial und
- eine zwischen der Metallschicht (12) und der Keramikschicht (12) angeordnete Pufferschicht (11), wobei die Pufferschicht (1) eine Mischung aus
-- dem ersten Metallmaterial und/oder einem zweiten Metallmaterial und
-- dem ersten Keramikmaterial und/oder einem zweiten Keramikmaterial umfasst, wobei die Pufferschicht (11) aus einem Verbundpulver hergestellt ist.

## Claims

1. A process for producing a metal-ceramic substrate (1) comprising:
- providing at least one metal layer (12) of a first metal material and at least one ceramic layer (10) of a first ceramic material;
- providing (101) at least one powder mixture comprising
- the first metal material and/or a second metal material; and
- the first ceramic material and/or a second ceramic material,
- arranging the at least one powder mixture between the at least one metal layer (12) and the at least one ceramic layer (10) to form a buffer layer (11) between the at least one metal layer (12) and the at least one ceramic layer (10) in the fabricated metal ceramic substrate (1), and
- performing a direct metal bonding process, especially a direct copper bonding process (105), to form the metal-ceramic substrate,
wherein the metal layer and the ceramic layer are bonded by the buffer layer (1), **characterized in that** the at least one powder mixture is realized as a composite powder, the composite powder being formed of hybrid powder particles comprising both the first metal material and the first ceramic material.

2. The process according to claim 1, wherein the powder mixture consists of more than 50%, preferably more than 75%, and particularly preferably more than 90% of the composite powder.

3. The process according to one of the preceding claims, wherein the powder mixture comprises a plurality of composite powders.

4. The process according to one of the preceding claims, wherein, in a preparation step (100), the at least one powder mixture is realized by a mechanofusion process.

5. The process according to one of the preceding claims, for arranging the at least one powder mixture between the at least one metal layer (12) and the at least one ceramic layer (10) further comprising:
- mixing (102) the at least one powder mixture with a solvent, especially an organic solvent, to form a paste,
- arranging (103) the paste on the at least one metal layer and/or the at least one ceramic layer
- removing (104) the solvent.

6. The process according to claim 5, wherein the paste is applied to the at least one metal layer (12) and/or the at least one ceramic layer (10) using screen printing, rolling and/or dipping.

7. The process according to one of the preceding claims, wherein a particle size of the first metal material and/or the second metal material in the powder mixture is between 0.1 and 100 µm, preferably between 0.1 and 50 µm, and most preferably between 0.5 and 25 µm.

8. The process according to one of the preceding claims, wherein a particle size of the first ceramic material and/or the second ceramic material is between 0.1 and 50 µm, preferably between 0.1 and 30 µm and most preferably between 0.2 and 20 µm.

9. The process according to one of the preceding claims, wherein the at least one metal layer (12) is at least partially embedded in the buffer layer (11).

10. The process according to one of the preceding claims, wherein a plurality of buffer layers (11) are arranged between the at least one ceramic layer (10) and the at least one metal layer (12), wherein the plurality of buffer layers (11) are different from each other, especially with respect to their thermal expansion coefficients.

11. The process for producing a metal-ceramic substrate (1), especially according to one of the preceding claims, comprising:
- providing at least one metal layer (12) comprising a first metal material and at least one ceramic layer (10) comprising a first ceramic material;
- providing (101) at least one powder mixture comprising
-- the first metal material and/or a second metal material and
-- the first ceramic material and/or a second ceramic material,
wherein the powder mixture is preferably realized as a composite powder,
- arranging the at least one powder mixture adjacent to the at least one metal layer (12) to form a filler, especially an edge grout, which edge grout is bonded to a side wall (14) of the at least one metal layer (12), and
- performing a direct metal bonding process, especially a direct copper bonding process (105) to form the metal-ceramic substrate (1).

12. The process according to claim 11, wherein the metal layer (12) has a curved or bent course at the outermost edge.

13. The process according to claim 11 or 12, wherein the metal layer and the ceramic layer are connected through the buffer layer.

14. The metal-ceramic substrate (1) realized by a process according to one of the preceding claims, comprising:
- a metal layer (12) of a first metal material and a ceramic layer (10) of a first ceramic material; and
- a buffer layer (11) arranged between the metal layer (12) and the ceramic layer (12), wherein the buffer layer (1) comprises a mixture of
-- the first metal material and/or a second metal material and
--the first ceramic material and/or a second ceramic material, wherein the buffer layer (11) is made of a composite powder.

## Revendications

1. Procédé de fabrication d'un substrat métal-céramique (1), comprenant à :
- fournir au moins une couche métallique (12) d'un premier matériau métallique et au moins une couche céramique (10) d'un premier matériau céramique ;
- fournir (101) au moins un mélange de poudres comprenant
-- le premier matériau métallique et/ou un deuxième matériau métallique, et
-- le premier matériau céramique et/ou un deuxième matériau céramique,
- mettre en place ledit au moins un mélange de poudres entre ladite au moins une couche métallique (12) et ladite au moins une couche céramique (10) pour former une couche tampon (11) entre ladite au moins une couche métallique (12) et ladite au moins une couche céramique (10) dans le substrat métal-céramique (1) fabriqué, et
- mettre en oeuvre un procédé de collage direct de métal, en particulier un procédé de collage direct de cuivre (105), pour former le substrat métal-céramique, la couche métallique et la couche céramique étant liées par la couche tampon (1),
**caractérisé en ce que**
ledit au moins un mélange de poudres est réalisé sous forme de poudre composite, la poudre composite étant formée de particules de poudre hybride comprenant aussi bien le premier matériau métallique que le premier matériau céramique.

2. Procédé selon la revendication 1,
dans lequel le mélange de poudres est constitué à plus de 50 %, de préférence à plus de 75 %, et de manière particulièrement préférée à plus de 90 % de la poudre composite.

3. Procédé selon l'une des revendications précédentes,
dans lequel le mélange de poudres comprend plusieurs poudres composites.

4. Procédé selon l'une des revendications précédentes,
dans lequel, lors d'une étape de préparation (100), ledit au moins un mélange de poudres est réalisé par un procédé de mécano-fusion.

5. Procédé selon l'une des revendications précédentes, pour mettre en place ledit au moins un mélange de poudres entre ladite au moins une couche métallique (12) et ladite au moins une couche céramique (10), présentant en outre à :
- mélanger (102) ledit au moins un mélange de poudres avec un solvant, en particulier avec un solvant organique, pour former une pâte,
- mettre en place (103) la pâte sur ladite au moins une couche métallique et/ou sur ladite au moins une couche céramique,
- éliminer (104) le solvant.

6. Procédé selon la revendication 5,
dans lequel la pâte est appliquée sur ladite au moins une couche métallique (12) et/ou sur ladite au moins une couche céramique (10) par sérigraphie, laminage et/ou immersion.

7. Procédé selon l'une des revendications précédentes,
dans lequel une taille de particules du premier matériau métallique et/ou du deuxième matériau métallique dans le mélange de poudres est comprise entre 0,1 et 100 µm, de préférence entre 0,1 et 50 µm, et de manière particulièrement préférée entre 0,5 et 25 µm.

8. Procédé selon l'une des revendications précédentes,
dans lequel une taille de particules du premier matériau céramique et/ou du deuxième matériau céramique est comprise entre 0,1 et 50 µm, de préférence entre 0,1 et 30 µm, et de manière particulièrement préférée entre 0,2 et 20 µm.

9. Procédé selon l'une des revendications précédentes,
dans lequel ladite au moins une couche métallique (12) est au moins partiellement incorporée dans la couche tampon (11).

10. Procédé selon l'une des revendications précédentes,
dans lequel plusieurs couches tampons (11) sont mises en place entre ladite au moins une couche céramique (10) et ladite au moins une couche métallique (12), lesdites plusieurs couches tampons (11) se distinguant les unes des autres, en particulier par leurs coefficients de dilatation thermique.

11. Procédé de fabrication d'un substrat métal-céramique (1) selon l'une des revendications précédentes, comprenant à :
- fournir au moins une couche métallique (12) comprenant un premier matériau métallique et au moins une couche céramique (10) comprenant un premier matériau céramique ;
- fournir (101) au moins un mélange de poudres comprenant
-- le premier matériau métallique et/ou un deuxième matériau métallique, et
-- le premier matériau céramique et/ou un deuxième matériau céramique,
le mélange de poudres étant de préférence réalisé sous forme de poudre composite,
- mettre en place ledit au moins un mélange de poudres à côté de ladite au moins une couche métallique (12) pour former un matériau de remplissage, en particulier un scellement de bord, qui est lié à un chant (14) de ladite au moins une couche métallique (12), et
- mettre en oeuvre un procédé de collage direct de métal, en particulier un procédé de collage direct de cuivre (105), pour former le substrat métal-céramique (1).

12. Procédé selon la revendication 11,
dans lequel la couche métallique (12) présente un tracé incurvé ou courbé à son bord le plus extérieur.

13. Procédé selon la revendication 11 ou 12,
dans lequel la couche métallique et la couche céramique sont liées par la couche tampon.

14. Substrat métal-céramique (1) réalisé par un procédé selon l'une des revendications précédentes, comprenant :
- une couche métallique (12) d'un premier matériau métallique et une couche céramique (10) d'un premier matériau céramique, et
- une couche tampon (11) mise en place entre la couche métallique (12) et la couche céramique (12), la couche tampon (1) étant un mélange constitué
-- du premier matériau métallique et/ou d'un deuxième matériau métallique, et
-- du premier matériau céramique et/ou d'un deuxième matériau céramique, la couche tampon (11) étant réalisée à partir d'une poudre composite.
